(19) Europäisches Patentamt

European Patent Office

Office européen des brevets

(11) **EP 1 486 957 A1**

(12) **EUROPÄISCHE PATENTANMELDUNG**

(43) Veröffentlichungstag:
**15.12.2004 Patentblatt 2004/51**

(51) Int Cl.⁷: **G11B 7/007**, G11B 27/24, G11B 7/09, G11B 19/28

(21) Anmeldenummer: **03013187.4**

(22) Anmeldetag: **12.06.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **Maiworm & Dr. Bosien Grundstücks GbR**
**01458 Ottendorf-Okrilla (DE)**

(72) Erfinder: **Seehausen, G.**
**52076 - Aachen (DE)**

(74) Vertreter: **Stenger, Watzke & Ring Patentanwälte**
**Kaiser-Friedrich-Ring 70**
**40547 Düsseldorf (DE)**

(54) **Datenträger des beschreibbaren, optisch auslesbaren Typs mit einer Servospur und Verfahren zur Herstellung der Servospur**

(57)    Der Erfindung liegt die Aufgabe zugrunde ein Verfahren zur Erzeugung einer Signalwelle zur Herstellung einer Servospur auf einem Datenträger des beschreibbaren optisch auslesbaren Typs sowie einen mit einer entsprechenden Servospur versehenen Datenträger bereitzustellen, so dass das Auslesen der in der Servospur enthaltenen Informationen weniger fehleranfällig ist. Verfahrensseitig ergibt sich ein Verfahren zur Erzeugung einer Signalwelle zur Herstellung einer Servospur auf einem Datenträger des beschreibbaren, optisch auslesbaren Typs, wobei in der Signalwelle ein abtrennbares digitales Informationsmuster enthalten ist, wobei

- das digitale Informationsmuster aus einem einzigen bitseriellen Datenstrom oder einer Vielfalt von bitseriellen Datenströmen bestehen kann, die durch Amplituden- oder Phasen-Manipulation von Teilschwingungspaaren in diese eingebracht werden,

- und die Teilschwingungspaare geeignet überlagert werden,

- wobei jedes dieser Teilschwingungspaare aus der Multiplikation einer ersten und einer zweiten harmonischen Schwingungskomponente mit unterschiedlichen Frequenzen besteht,

- und die Teilschwingungspaare die zusätzliche Eigenschaft aufweisen können, dass die ersten Schwingungskomponenten und die zweiten Schwingungskomponenten einer Teilschwingung zueinander orthogonal sind,

- und im Falle, dass das Informationsmuster aus nur einem einzigen bitseriellen Datenstrom besteht, dieser Datenstrom in mindestens zwei komplementäre Signale aufgespalten wird, die unterschiedlichen Kanalcodierungsvorschriften, Modulationsarten oder Spektralbereichen unterzogen werden.

Der erfindungsgemäße Datenträger weist eine ein digitales Informationsmuster abtrennbar enthaltene Servospur auf, die einer nach dem erfindungsgemäßen Verfahren gebildeten Signalwelle entspricht.

Fig. 2a

EP 1 486 957 A1

**Beschreibung**

Die vorliegende Erfindung betrifft ein Verfahren zur Erzeugung einer Signalwelle zur Herstellung einer Servospur auf einem Datenträger des beschreibbaren, optisch auslesbaren Typs, wobei in der Signalwelle ein abtrennbares digitales Informationsmuster enthalten ist. Darüber hinaus betrifft die Erfindung einen Datenträger vom beschreibbaren, optisch auslesbaren Typ mit einer Servospur, die der nach dem erfindungsgemäßen Verfahren erzeugten Signalwelle entspricht. Schließlich betrifft die Erfindung einen Generator zur Erzeugung einer erfindungsgemäßen Signalwelle und einen entsprechenden Decoder.

Datenträger des beschreibbaren, optisch auslesbaren Typs sind unter den Bezeichnungen CD-R, DVD-R und dergleichen in großen Mengen im Einsatz und bekannt. Sie dienen der Aufzeichung digitaler Daten unter Verwendung von Laserlicht. Zu diesem Zweck sind die aus Kunststoff gebildeten Datenträger mit Beschichtungen versehen oder enthalten Materialien, deren Reflektionsverhalten durch Laserlicht einer bestimmten Intensität veränderbar ist. Die Datenträger werden sowohl zum Beschreiben als auch zum Auslesen mit hoher Geschwindigkeit gedreht. Ein radial geführter Laser bewegt sich somit auf einer spiralförmig, üblicherweise von Innen nach Außen, verlaufenden Spur. Beim Brennen verändert der brennende Laserstrahl punktuell bzw. streckenweise das laserempfindliche Material. Bei Auslesen derartig beschriebener Datenträger wird wiederum ein Laserstrahl entlang der gleichen Spur geführt und sein Licht wird in den entsprechenden Bereichen unterschiedlich reflektiert, so dass sich wenigstens zwei Zustände, also 0 und 1 interpretieren lassen. Der Zustandswechsel wird in der Regel durch den Wechsel von einem Reflektionstyp auf den anderen Reflektionstyp durchgeführt. Um das Beschreiben und das Auslesen sowie gegebenenfalls Positionierungen der Schreib- bzw. Leselaser durchführen zu können, ist auf dem Datenträger eine spiralförmig verlaufende Spur aufgebracht. Diese Spur wird Servospur genannt und ist mittels der Laser detektierbar und kann somit zur Führung der Laser verwendet werden. Die digitalen Daten werden jeweils in oder neben der Spur entlang der sich ergebenden Spiralfläche aufgebrannt und von dort ausgelesen.

Aufgrund der großen Speicherkapazität der beschriebenen Datenträger ist vorgesehen, Ortsinformationen, Adresssignale, in der Regel repräsentiert durch fortlaufende Zeitsignale, auf dem Datenträger anzuordnen, so dass schnell und sicher gewünschte Bereiche gezielt angesteuert werden können. Auch andere Informationen, die zur Steuerung beispielsweise der Drehgeschwindigkeit, der Laserintensität und dergleichen verwendet werden sollen, werden wünschenswerter Weise auf dem Datenträger untergebracht.

Eine Möglichkeit, Zeit- bzw. Adressinformationen ebenso wie Steuerinformationen auf dem Datenträger möglichst ohne Verlust von Speicherkapazität unterzubringen, ist in der JP 61 243974 A offenbart. Hier wird die spiralförmige Servospur durch von vornherein in den Datenträger eingepresste Vertiefungen, Pits genannt, zwischen denen nicht vertiefte Bereiche, Lands genannt, verbleiben, gebildet. Die Pits und Lands sind entsprechend der herkömmlichen CD-Technologie Bereiche unterschiedlichen Reflektionsverhaltens und eignen sich somit zur Interpretation als digitaler Datenstrom.

Gemäß der DE 31 00 421 wird die Servospur durch eine durchgehende im wesentlichen sinusförmige Welle konstanter Frequenz gebildet. Die Adressinformationen werden in Form von Pits und Lands im Spurbereich untergebracht. Hierdurch wird der Speicherbereich in störender Weise unterbrochen.

Eine Reihe von Offenbarungen befasst sich damit, die gewünschten Adress- und gegebenenfalls Steuerinformationen direkt in eine als ununterbrochene Welle dargestellte Servospur einzuarbeiten. Die EP-A-0 265 695 beschreibt die Bildung der Welle unter Verwendung einer ersten Frequenz. Diese Welle wird getaktet gelesen, so dass immer eine Gruppe aus einer vorgegebenen Anzahl von Schwingungen betrachtet wird. Zur Unterscheidung einer digitalen 0 von einer digitalen 1 werden eine vorgegebene Anzahl von Schwingungen der ersten Frequenz durch Schwingungen einer zweiten Frequenz ersetzt. Es werden somit Gruppen gebildet, die ausschließlich aus Schwingungen der ersten Frequenz bestehen und Gruppen, die sowohl Schwingungen der ersten als auch Schwingungen der zweiten Frequenz enthalten. Damit sind diese Gruppen als voneinander unterschiedlich interpretierbar, so dass sich die beiden Zustände 0 und 1 darstellen lassen. Die EP-A-0 299 573 beschreibt, die Amplitude einer vorgegebenen Schwingung in Abhängigkeit vom digitalen Signal, also 0 oder 1, zu modulieren. Die EP-A-0 265 984 offenbart, die Frequenz einer vorgegebenen Schwingung in Abhängigkeit von einem digitalen Adresssignal zu modulieren. Die EP-A-0 325 330 offenbart, die Frequenz einer vorgegebenen Schwingung in Abhängigkeit von einem durch digitale Synchronisationssignale unterbrochenen Adresssignal zu modulieren.

In allen beschriebenen Fällen wird jeweils eine einziges bitserielles Datensignal in die Servospur einmanipuliert. Manipulation im Sinne der vorliegenden Erfindung meint jegliches Verfahren zur Veränderung einer vorgegebenen Schwingung in Abhängigkeit von einem digitalen Datenstrom, der sich aus der resultierenden Schwingung wieder extrahieren lässt. Hierzu gehören unter anderem die bekannten Verfahren wie Amplitudenmodulation, Frequenzmodulation, Phasenverschiebung, Pulscodierung und dergleichen.

Ein Nachteil aller vorbekannten Verfahren besteht darin, unter Vorgabe einer einzelnen Manipulationsart Einzelfrequenzen zu verwenden. Die Einzelfrequenzen liegen in allen offenbarten Fällen sehr dicht beieinander und um eine möglichst schnelle Steuerung zu ermöglichen stehen regelmäßig nur sehr wenig Schwingungen zur Verfügung, um unter Anwendung der entsprechenden Demodulation festzustellen, welche der beiden Einzelfrequenzen vorhanden sind, um dann auf den gewünschten Digitalwert entweder des Datensignals direkt oder einer gegebenenfalls gewählten Zwischencodierung zu schließen. Stehen nur dreieinhalb Schwingungen zur Verfügung, um, wie im Stand der Technik offenbart, das Vorliegen einer Frequenz von 22,05 KHz bei einer Abweichung von ±1 KHz zur Unterscheidung zweier Zustände wie 0 und 1 zu differenzieren, so hat kein technisches System aufgrund seines geforderten Bandpasscharakters die Möglichkeit, sich sauber einzuschwingen. Denn je kleiner die Frequenzdifferenz bezogen auf die Mittenfrequenz ist, desto kleiner ist seine relative Bandbreite. So ergibt sich beispielsweise bei einer Mittenfrequenz von 22,05 KHz und einer Frequenzdifferenz von 2 KHz eine relative Bandbreite von ca. 9%. Die Einschwingzeit des Decoders ist allerdings umgekehrt proportional zur relativen Bandbreite und würde im vorliegenden Beispiel, das der in der EP 0 325 330 vorgeschlagenen Ausführung entspricht, eine Einschwingdauer von einer Vielzahl von 22,05 KHz-Schwingungsperioden beansprucht. Das heißt, dass eine zuverlässige Frequenzmessung nur gegeben ist, wenn die Messzeit eine Vielzahl von Schwingungsperioden beträgt. Da in der EP 0 325 330 allerdings eine Bitperiodendauer und somit eine Messzeit von nur 3,5 Schwingungsperioden vorgeschlagen wird, resultieren hier zwangsläufig ständige Messfehler durch Überschreiten der binären Frequenzauflösungsgrenze.

Ein weiteres Problem, das durch die nach dem Stand der Technik arbeitenden Verfahren auftritt, wird durch die Begünstigung systematischer Fehler gekennzeichnet. Denn so ist z. B. das in der EP 0 325 330 verwendete Spursignal-Modulationsverfahren nicht binär-symmetrisch, was sich durch unterschiedliches Fehlerverhalten bei der Dekodierung von logischen Null- und Einswerten äußert. In der EP 0 325 330 wird zur Kanalcodierung die Biphase-Mark-Codierung herangezogen. Folglich wird ein 1-Datenbit aufgrund der Kanalcodierung in zwei unterschiedliche Frequenzschwingungen von je 3,5 Perioden und ein 0-Datenbit in eine Frequenzschwingung von 7 Perioden umgewandelt. Demzufolge ist die bei der Dekodierung zur Frequenzmessung verfügbare Messzeit abhängig vom logischen Wert des Datensignals und die zugehörige Binärübertragung somit unsymmetrisch, was zwangsläufig eine ungünstige Fehlersystematik zur Folge hat. Eine verlässliche Vorausermittlung des Fehlerverhaltens ist nur schwerlich möglich, da statistische Fehlerbehandlungs-Verfahren im allgemeinen von binärem symmetrischen Verhalten (binary symmetric channel) ausgehen.

Ungünstigerweise kommen zu den genannten Problemen in praktischen Systemen noch weitere Fehler hinzu, die durch Fertigungstoleranzen und Oberflächenrauhigkeit bei der Datenträgerherstellung entstehen. Zusätzliche Rauscheinflüsse ergeben sich aufgrund der optischen Signalübertragung, da die verwendeten Signalenergien bei der Datenauslesung zumeist klein sind. Hierdurch werden die Systeme fehleranfällig. Darüber hinaus machen die vorbekannten Verfahren eine sehr enge Vorgabendefinition für die Hardware und die Software zum Beschreiben bzw. Auslesen digitaler Datenträger erforderlich. Hardware und Software müssen sehr enge Toleranzen berücksichtigen und unter Inkaufnahme von Fehlern in der Lage sein, beispielsweise das Vorhandensein oder Nichtvorhandensein einer von zwei sehr dicht beieinanderliegenden Frequenzen aus nur sehr wenigen Schwingungen, beispielsweise dreieinhalb Schwingungen, zu entscheiden. Die vorgegebenen Verfahren sind in Bezug auf Modulation und Demodulation sehr streng bzw. nicht variabel. Darüber hinaus bieten sie keinerlei Redundanz, so dass aufwendige Fehlerkorrekturverfahren selbst für die in der Servospur enthaltenen Werte erforderlich sind, um die Fehlerrate zu reduzieren. So entfallen nach dem Verfahren gemäß der EP 0 325 330 pro Datenrahmen14 Fehlerkorrekturbits auf 24 Nutzbits, was einer äußerst hohen Korrektur- zu Nutzbitrate von 58 % entspricht. Diese hohe Korrekturbitanzahl hat den Nachteil, dass die für die Nutzbits verbleibende Bitperiodendauer und damit auch die zur Verfügung stehende Messzeit bei der Docodierung noch weiter verkürzt wird.

Ausgehend vom vorbeschriebenen Stand der Technik liegt der Erfindung die **Aufgabe** zugrunde, ein Verfahren zur Erzeugung einer Signalwelle zur Herstellung einer Servospur auf einem Datenträger des beschreibbaren optisch auslesbaren Typs sowie einen mit einer entsprechenden Servospur versehenen Datenträger bereitzustellen, so dass das Auslesen der in der Servospur enthaltenen Informationen weniger fehleranfällig ist. Darüber hinaus soll die Servospur bzw. die ihr zugrundeliegende Signalwelle variabler hinsichtlich der Möglichkeiten sein, digitale Daten in die Welle hinein zu manipulieren, also in Bezug auf die unterschiedlichsten Modulationsarten mehr Möglichkeiten bieten, und die Option der Datenredundanz bereitstellen, so dass nicht nur ein einziger serieller Datenstrom sicher in der Servospur angeordnet werden kann.

Verfahrensseitig wird diese Aufgabe **gelöst** durch ein Verfahren zur Erzeugung einer Signalwelle zur Herstellung einer Servospur auf einem Datenträger des beschreibbaren, optisch auslesbaren Typs, wobei in der Signalwelle ein abtrennbares digitales Informationsmuster enthalten ist, wobei das digitale Informationsmuster durch Amplituden- und/oder Phasen-Manipulation von überlagerten Teilschwingungspaaren in diese eingebracht wird, wobei jedes dieser Teilschwingungspaare aus der Multiplikation einer ersten und einer zweiten harmonischen Schwingungskomponente mit unterschiedlichen Frequenzen besteht.

Erfindungsgemäß ergibt sich somit, dass

- das digitale Informationsmuster aus einem einzigen bitseriellen Datenstrom oder einer Vielfalt von bitseriellen Datenströmen bestehen kann, die durch Amplituden- oder Phasen-Manipulation von Teilschwingungspaaren in diese eingebracht werden,

- und die Teilschwingungspaare geeignet überlagert werden,

- wobei jedes dieser Teilschwingungspaare aus der Multiplikation einer ersten und einer zweiten harmonischen Schwingungskomponente mit unterschiedlichen Frequenzen besteht,

- und die Teilschwingungspaare die zusätzliche Eigenschaft aufweisen können, dass die ersten Schwingungskomponenten und die zweiten Schwingungskomponenten einer Teilschwingung zueinander orthogonal sind,

- und im Falle, dass das Informationsmuster aus nur einem einzigen bitseriellen Datenstrom besteht, dieser Datenstrom in mindestens zwei komplementäre Signale aufgespalten wird, die unterschiedlichen Kanalcodierungsvorschriften, Modulationsarten oder Spektralbereichen unterzogen werden.

Das resultierende, erfindungsgemäße Spurfolgesignal wird also durch die Kombination von Amplituden- und Phasenmanipulation gebildet, wobei den Teilschwingungspaaren unterschiedliche Spektralbereiche zugeordnet werden.

Durch diese erfindungsgemäße Vorgehensweise besteht nun die Möglichkeit, die völlig unterschiedlichen Anforderungen an die Servospur zu berücksichtigen. Zum einen können die Schwingungspaare und die verwendete Modulationsart unter reinen verarbeitungstechnischen Gesichtspunkten optimal gewählt werden. Die sich ergebende resultierende Welle ist jedoch nicht unbedingt auch optimal für die Zwecke der Aufzeichnung und das Auslesen mittels eines Lasers. Aus diesem Grunde können die Spektralbereiche der Schwingungspaare so gewählt werden, dass sich eine hinsichtlich Beschreiben und Auslesen optimale Servorspur ergibt, die die physikalisch technischen Randbedingungen der Lasergeräte berücksichtigen.

Wird beispielsweise für die zweite Schwingungskomponente eine Frequenz gewählt, die deutlich von derjenigen der ersten Schwingungskomponente abweicht, und werden darüber hinaus sowohl die erste als auch die zweite Frequenz aus einem sehr hohen Frequenzband gewählt, so wird auf einfache Weise erreicht, dass eine hohe Anzahl von Schwingungen pro Taktzahl erfasst und verarbeitet werden können. Dadurch stehen mehr Differenzierungsmöglichkeiten zur Verfügung. Die eigentliche Demodulation kann darüber hinaus von der Modulation unterschiedlich sein. Das Verfahren ist somit sowohl verarbeitungstechnisch als auch im Einsatz einfacher, variabler und weniger fehleranfällig. Die im Endergebnis resultierende Gesamtwelle ist die Signalwelle, die auf den Ablenkspiegel eines Brennlasers geschaltet wird, um auf einer Basisform, üblicherweise einer chemisch beschichteten Glasscheibe, einem sogenannten Glasmaster, eine Servospur zu erzeugen. Diese resultierende Welle kann nun mit einem optimal gewählten Verfahren interpretiert werden. Bei Verwendung hoher Frequenzen liegt die Welle in einer Art Frequenzband bzw. einem Frequenzkanal, ist also tolerant bezüglich der Interpretation und enthält nicht nur die gegebenen Teilwellen unterschiedlicher Frequenzen sondern auch das digitale Informationsmuster. Im einfachsten Fall wird das Erzeugungsverfahren rückwärts angewandt, d. h. zweite Signalkomponente mit zweiter Frequenz durch Mischung ausgefiltert und die erste Signalkomponente mit erster Frequenz zum Erhalt der digitalen Daten demoduliert.

Ein besonderer Vorteil der Erfindung ergibt sich nunmehr aus der Möglichkeit, eine Vielzahl von Schwingungspaaren zu erzeugen und einander zu überlagern. Dies ist gleichbedeutend mit der parallelen Übertragung unterschiedlicher digitaler Informationsmuster, so dass sich einerseits die Möglichkeit der Datenredundanz zur Fehlerreduzierung oder gar Fehlervermeidung ergibt, andererseits aber auch die Möglichkeit der Übermittlung von Multiinformationen gegeben ist.

Eine nach dem erfindungsgemäßen Verfahren erzeugte Signalwelle lässt sich zum einen an nahezu beliebige technologische Vorbedingungen anpassen, da es lediglich darauf ankommt, durch geeignete Wahl eines Manipulationsverfahrens und wenigstens zweier Frequenzen gezielt eine Ergebniswelle zu erzeugen, die sich beispielsweise von vorgegebenen Lesegeräten wunschgemäß interpretieren lässt, andererseits besteht die Möglichkeit, beispielsweise völlig unterschiedliche Modulationsarten für unterschiedliche Informationsmuster zu kombinieren, also bezüglich der Datengewinnung variabel zu sein, und darüber hinaus bietet sich die grundsätzliche Möglichkeit der Multlinformationsübertragung, also der Parallelübertragung digitaler Daten, also auch die Möglichkeit der Redundanz oder der Informationsvielfalt.

Gemäß einem weiteren vorteilhaften Vorschlag der Erfindung wird eine Datenstruktur einer ersten Signalwelle als bipolare, einer zweiten Signalwelle auf unipolare Form übertragen. Die beiden Signalwellen können gemäß einem Vorschlag der Erfindung von gleicher Frequenz, jedoch zueinander phasenverschoben sein. Werden die sich ergebenden Teilwellen jede für sich nunmehr mit entsprechenden zweiten Signalwellen zweiter Frequenzen überlagert und aus den überlagerten Teilwellen eine Endwelle gebildet, so ermöglicht diese Welle eine sehr detailliert Differenzierung hinsichtlich der Informationsrückgewinnung und ist in Bezug auf die entsprechenden Verfahren variabel.

Mit der Erfindung wird ein neuartiger Bereich der Signalwellenerzeugung eröffnet, um digitale Informationsstrukturen in analog gebildeten Wellen zu übermitteln. Die Wellen liegen in einem vorgegebenen Frequenzband bzw. -kanal, sind jedoch hinsichtlich der Zerlegung tolerant und können die Informationen durch Teilwellenbildung in unterschiedlicher Weise enthalten. Es lassen sich sogar auf die Teilwellen jeweils unterschiedliche Modulationsverfahren anwenden, um die Differenzierungsmöglichkeiten noch zu erhöhen. Die Signalwellen lassen sich auf völlig unterschiedliche Anforderungen der Signalverarbeitung einerseits und der rein physikalisch-technischen Signalerfassung andererseits optimieren. Darüber hinaus können die Signalwellen unter dem Gesichtspunkt der Übertragung parallel vorliegender digitaler Informationsströme gebildet werden.

Der erfindungsgemäße Datenträger ist ein Datenträger des beschreibbaren, optisch auslesbaren Typs, wobei in der Signalwelle ein abtrennbares digitales Informationsmuster enthalten ist, wobei die Signalwelle einer nach dem erfindungsgemäßen Verfahren gebildeten Signalwelle entspricht.

Auch für den Datenträger ergibt sich, dass

- das digitale Informationsmuster aus einem einzigen bitseriellen Datenstrom oder einer Vielfalt von bitseriellen Datenströmen bestehen kann, die durch Amplituden- oder Phasen-Manipulation von Teilschwingungspaaren in diese eingebracht werden,

- und die Teilschwingungspaare geeignet überlagert werden,

- wobei jedes dieser Teilschwingungspaare aus der Multiplikation einer ersten und einer zweiten harmonischen Schwingungskomponente mit unterschiedlichen Frequenzen besteht,

- und die Teilschwingungspaare die zusätzliche Eigenschaft aufweisen können, dass die ersten Schwingungskomponenten und die zweiten Schwingungskomponenten einer Teilschwingung zueinander orthogonal sind,

- und im Falle, dass das Informationsmuster aus nur einem einzigen bitseriellen Datenstrom besteht, dieser Datenstrom in mindestens zwei komplementäre Signale aufgespalten wird, die unterschiedlichen Kanalcodierungsvorschriften, Modulationsarten oder Spektralbereichen unterzogen werden, und

- die erhaltene Signalwelle als Servospur auf dem Datenträger aufgebracht wird.

Der erfindungsgemäße Datenträger unterscheidet sich von vorbekannten Datenträgern der gattungsgemäßen Art rein physikalisch durch eine gegenüber herkömmlichen Spurverläufen unterschiedliche Form der Servorspur. Obwohl sie im wesentlichen harmonisch verlaufen kann, kann sie auch erheblich davon abweichende, nicht harmonische Formen annehmen. Sie kann mehrere digitale Informationsmuster parallel enthalten und die Servospur weist die Vorteile der ihr zugrundeliegenden Signalwelle auf.

Zur Erzeugung einer entsprechenden Signalwelle wird weiterhin vorgeschlagen ein Generator zur Erzeugung einer Signalwelle nach dem Verfahren nach einem der Ansprüche 1 bis 8, dadurch gekennzeichnet, dass dieser eine Funktionsgruppe umfasst, welche

- Speichereinheiten für die Abtastwerte von Schwingungen unterschiedlicher Frequenzen,

- Einheiten zur Erzeugung von Teilsignalen durch die Einbringung eines digitalen Datenstroms in die Tellschwingungen und

- Einheiten zur Überlagerung der Teilschwingungen zu einem Gesamtsignal aufweist.

Dieser bietet die Möglichkeit der Teilwellenbildung und Überlagerung zur Ausbildung der gewünschten Gesamtwelle. Die Multiinformationsübertragung wird möglich, wenn der Generator mehrere Funktionsgruppen des schwebenden Typs aufweist, so dass aus den Gesamtsignalen ein die Servospur bildendes Endsignal gebildet wird.

Zur Informationsrückgewinnung wird vorgeschlagen ein Decoder zur Bildung eines digitalen Informationsmusters aus einer nach dem Verfahren nach einem der Ansprüche 1 bis 8 gebildeten Signalwelle, dadurch gekennzeichnet, dass dieser eine Funktionsgruppe umfasst, welche

- Optimalfilter zur Erzeugung von an die Pulsformen einer digitalen Datenstruktur angepassten Stoßantworten,

- Hüllkurvendetektoren,

- Subtrahierer eines auf ein Maximum anwachsenden positiven bzw. negativen Signals und

- Einheiten zur Zuordnung eines "1 "-Bits bzw. "0"-Bits zu dem aus dem Subtrahierer stammenden positiven bzw. negativen Signal aufweist.

Dieser ist in der Lage, die von einem entsprechenden Datenträger durch Laserreflektion erfassten Servospursignale zu verarbeiten, um die enthaltenen Digitalinformationen zurück zu gewinnen. Auch hier ist eine Multifunktionsübertragung möglich, wenn mehrere Funktionsgruppen vorhanden sind.

Diese Binärdatenströme können beispielsweise jeweils unterschiedlichen Informationscharakter aufweisen. Hierzu gehören z. B. Positionsinformationsdaten, wie

- Adressdaten
- Zeitdaten

oder Aufzeichnungssteuerungsdaten, wie

- Adress- oder zeitrelevante Inhaltsangaben
- Brenngeschwindigkeiten, Laserleistung, Brennstrategien

und sicherheitsrelevante Daten, wie

- Kopierschutzinformationen für die aufzuzeichnenden Daten
- Zugriffsrechte auf Teilinhalte.

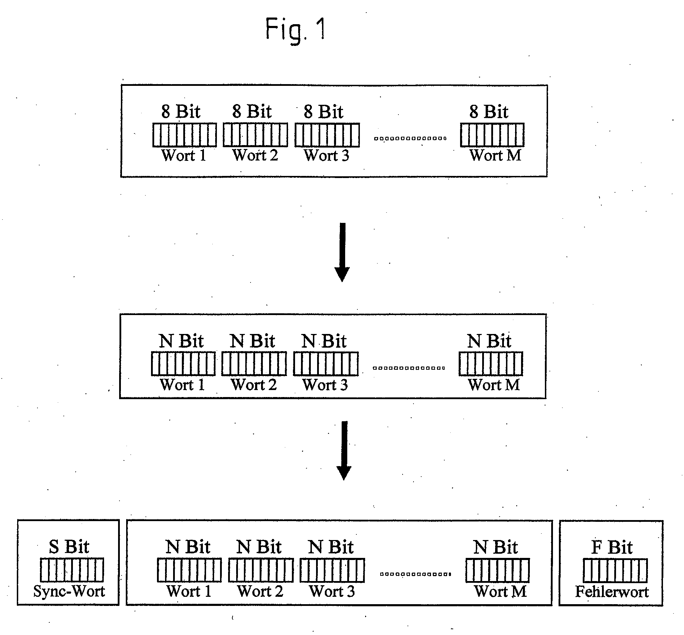

Die Binärdatenströme können den in Figur1 dargestellten Rahmenaufbau haben. Es wird eine Anzahl M von Informationsworten, die jeweils aus 8 Bit bestehen, zu einem Datenrahmen zusammengefasst. Um Rauscheinflüsse bei der Übertragung zu minimieren, werden an jeden Mx8-Bit-Datenrahmen eine bestimmte Anzahl redundanter Fehlerkorrekturbits angehangen. Die Fehlerkorrekturbits entstehen mittels Division des aus den Informationsbits gebildeten Informationspolynoms durch ein Generatorpolynom, wie es zum Beispiel bei der BCH-Codierung üblich ist. Mittels einer gleichspannungsfreien Kanalcodierung werden alle 8-Bit-Informationsworte in Kanaldatenworte zu je N Bit umcodiert, wobei die Bitanzahl N größer als 8 ist. Eine geeignete Kanalcodierung ist die Biphase-Mark-Codierung, die folgende Codierungsvorschrift enthält:

- Es findet immer ein Bitwechsel nach einer Kanalbitperiode statt
- Nach der halben Kanalbitperiode findet nur ein Bitwechsel statt, wenn das Informationsdatenbit den logischen Wert "1" hat

Selbstverständlich ist das Verfahren nicht auf die Biphase-Mark-Codierung beschränkt. So können auch alternative Kanalcodierungen, wie z. B. Manchester Codierung, Biphase-Space-Codierung, Miller Codierung, die beispielsweise in "Bernhard Sklar: Digital Communications, Prentice Hall, 1988, S.80 ff., beschrieben sind, verwendet werden.

Im Falle der Biphase-Mark-Codierung, wie auch bei vielen anderen Kanalcodierungen üblich, erweitert sich die Bitanzahl N der Kanaldatenworte auf das Doppelte, nämlich beispielsweise auf 16. Der Anfang eines jeden kanalcodierten Datenrahmens wird durch ein eindeutiges Synchronisationswort, das nicht Bestandteil der Menge aller möglichen Kanaldatenworte ist, gekennzeichnet. Dieses Synchronisationswort ist in Figur 1 mit "Sync" bezeichnet. Auch die Fehlerkorrekturbits werden mittels der Kanalcodierung in F Fehlerkorrekturkanalbits umgewandelt, die in Figur 1 als "F Bit" gekennzeichnet sind. Die Anzahlen M, N und F können für jeden der multiinformellen Binärdatenströme unterschiedlich gewählt sein. Bevorzugt werden Anzahlen, die einen gemeinsamen ganzzahligen Teiler haben.

Vorzugsweise werden L bipolare Datenströme mit normierten physikalischen Pegelwerten $a_{kl}$ betrachtet, denen ein positiver Pegel $+A$ oder ein negativer Pegel $-A$ zugewiesen werden kann. Hierbei kennzeichnet A eine beliebige Spannungsamplitude. Typische Werte von $A$ sind 3,3 Volt oder 5 Volt. Der Sonderfall $A=0$ sei zur zeitlich befristeten oder unbefristeten Deaktivierung eines bipolaren Datenstromes zugelassen. Zusätzlich oder alternativ können L unipolare Binärdatenströme mit den normierten physikalischen Pegelwerten $b_{klG}$ und $b_{klU}$ übertragen werden, deren positive Pegel beliebige normierte Amplituden aufweisen. Ein bevorzugter Spezialfall ist $b_{klG} = b_{klU}$, wobei der Pegelvorrat aus $\{A,0\}$ besteht. Zur Deaktivierung eines unipolaren Datenstromes kann $A$ zeitlich befristet oder unbefristet auf 1 festgesetzt werden. Zum Verständnis sei noch angemerkt, dass jeder logische Datenstrom, der aus den logischen Werten "0" = "false" und "1" = "true" besteht, sowohl einem unipolaren als auch einem bipolaren physikalischen Datenstrom zugeordnet werden kann.

Die Datenströme können unterschiedliche Pulsformen für die jeweiligen Logikwerte haben. Das "1"-Bit des I-ten Datenstromes kann beispielsweise durch den Pegel $+A$ sowie die Pulsform $s_{1l}(t)$ und das 0"-Bit kann durch den Pegel -*A* b.z.w. *0* sowie die Pulsform $s_{0l}(t)$ repräsentiert werden. Der Rahmenaufbau eines geeigneten Datensignals ist in Figur 1 dargestellt.

Den L Datenströmen werden jeweils L unterschiedliche Frequenzpaare $f_l$ , $f_{dl}$ zugeordnet mit der Anforderung, dass $f_l$ größer als $f_{dl}$ sein muss, um eventuell auftretende Spiegelfrequenzsignalanteile zu unterdrücken. Um technischmathematische Symmetriebeziehungen nutzen zu können, wird als weiterer Spezialfall bevorzugt, dass die Periodenanzahl $P_{Bl}$ der harmonischen Schwingungssignale mit den Frequenzen $f_l$ innerhalb der ihr zugeordneten Bitperiode ein ganzzahliges Vielfaches von ½ ist. Die definierten Anforderungen an das modulierte multiinformelle Spursignal werden durch die nachfolgende Signalfunktion auf ideale Weise erfüllt:

$$s(n) = \sum_{l=0}^{L-1} [ b_{k_l\, G} \cdot s_{lG} \cdot \cos(2\pi n \frac{f_l}{f_{Tl}}) + b_{k_l\, U} \cdot s_{lU} \cdot \sin(2\pi n \frac{f_l}{f_{Tl}})]$$

mit:

$$s_{lG}(n) = (-1)^{k_l} \sin(2\pi\, n\, \frac{a_{k_l} \cdot f_{dl}}{f_{Tl}} + \phi_{k_l})$$

$$s_{lU}(n) = (-1)^{k_l} \cos(2\pi\, n\, \frac{a_{k_l} \cdot f_{dl}}{f_{Tl}} + \phi_{k_l})$$

$$\phi_{k_l} = 2\pi \cdot P_{Bl} \cdot \frac{f_{dl}}{f_{Tl}} \cdot \sum_{i=0}^{k_l-1} a_i$$

Das erfindungsgemäße Spursignal wird also dadurch gebildet, dass Teilschwingungspaare mit Amplituden, die identisch mit den normierten Pegeln der unipolaren Datenströme sind, überlagert werden. Jedes dieser Teilschwingungspaare besteht aus der Multiplikation einer ersten und einer zweiten harmonischen Schwingungskomponente, wobei die Frequenz der ersten Schwingungskomponente kleiner als die Frequenz der zweiten Schwingungskomponente ist und der Phasenwinkel der ersten Schwingungskomponente von den normierten Pegeln der bipolaren Datenströme abhängt. Die Teilschwingungspaare weisen die zusätzliche Eigenschaft auf, dass die ersten Schwingungskomponenten einer Teilschwingung zueinander orthogonal sind und die zweiten Schwingungskomponenten einer Teilschwingung zueinander orthogonal sind. Der Begriff "orthogonal" soll hier im streng mathematischen Sinne verstanden werden: Das Integral über eine Periode zweier zueinander orthogonaler Funktionen ist Null. Es ist offensichtlich, dass das resultierende, erfindungsgemäße Spurfolgesignal durch Kombination von Amplituden- und Phasen manipulation gebildet wird, wobei den Teilschwingungspaaren unterschiedliche Spektralbereiche zugeordnet werden.

Besteht ein Informationsmuster aus Multiinformationen, also aus mehreren parallelen bitseriellen Datenströmen, so können diese Datenströme, die sowohl unipolar als bipolar gestaltet sein können, auf die beschriebene Weise in einem einzigen kontinuierlichen Spursignal untergebracht werden, wobei von der dargelegten erfindungsgemäßen Kombination aus Amplituden- und Phasen manipulation und Aufspaltung in unterschiedliche Spektralbereiche Gebrauch gemacht wird.

Besteht das Informationsmuster aus nur einer Information, also aus nur einem bitseriellen Datensignal, so kann auch in diesem Falle die erfindungsgemäße Spursignalbildung höchst vorteilhaft verwendet werden, da die beschriebenen Nachteile der unsymmetrischen Binärübertragung, der Dekodierprobleme durch Überschreiten der binären Frequenzauflösungsgrenze und der damit verbundenen Bitfehler bei Spursignalbildung gemäß des Standes der Technik umgangen werden. Bei nur einer Information besteht nämlich die höchst vorteilhafte Möglichkeit, diese Information auf mehr als ein, also z. B. zwei bitserielle Datensignale so aufzuteilen, dass die beiden Datensignale beispielsweise invertiert zueinander oder komplementär durch Aufteilung in bipolaren und unipolaren Datenstrom gestaltet sind. Auf diese Weise werden systematische Fehler unterbunden. Der Effekt wird noch weiter verstärkt, wenn die beiden Datenströme unterschiedlichen Kanalcodierungsvorschriften unterworfen werden. Vorteilhafter Weise sollten den beiden Datenströmen auch unterschiedliche Frequenzbereiche (spread spectrum) zugeordnet werden, da dann bei der Decodierung die begünstigende Möglichkeit besteht, den Frequenzbereich mit der besten Frequenzauflösung auszuwählen. Hierbei ist zusätzlich anzumerken, dass optische Aufzeichnungs- und Wiedergabegeräte über Servoeinrichtungen zur Fokussierung und Spurführung des Laserstrahles verfügen, die Frequenzübertragungseigenschaften mit ausgeprägtem Resonanzverhalten aufweisen. Folglich existieren, je nach Bauform, Spektralbereiche mit bevorzugter Auflösungsempfindlichkeit. Auch dieser Eigenschaft trägt die erfindungsgemäße Spursignalbildung durch Aufteilung der Information auf verschiedene Frequenzbereiche Rechnung.

Zur Erzeugung des modulierten uni- oder multiinformellen Spursignals sind Signalverarbeitungsrechner oder speziell entwickelte integrierte logische Schaltkreise von besonderem Vorteil, da sie über geeignete Multiplikations- und Additionseinrichtungen verfügen oder ausgestattet werden können. Zudem verfügen diese Systeme über ausreichende Rechengenauigkeit und Speicherkapazität. Es bietet sich daher an, das modulierte Spursignal s($n$) aus digitalen Abtastwerten zusammenzusetzen, die mit den Frequenzen $f_{T\,l}$ aufeinanderfolgen. Zur Reduzierung des Schaltungsaufwandes können die Frequenzen $f_{Tl}$ unterschiedlich sein und den Frequenzpaaren $f_l$, $f_{dl}$ angepasst werden. So kann zum Beispiel bei niedriger Frequenz $f_l$ oder $f_{dl}$ die Abtastfrequenz $f_{Tl}$ niedriger gewählt werden als bei hohen Frequenzen $f_l$, $f_{dl}$. Der Index $n$ im Spursignal $s(n)$ kennzeichnet die fortlaufenden zeitdiskreten Abtastwerte. Diese müssen mit Hilfe eines üblichen Digital-Analog-Umsetzers und einem nachgeschalteten, angepassten Tiefpass in ein zeit- und wertekontinuierliches Signal überführt werden, bevor sie auf den Ablenkspiegel des Masteraufzeichnungsgerätes gegeben werden können.

Weitere Vorteile der Erfindung ergeben sich aus der folgenden Beschreibung anhand der Figuren. Dabei zeigen:

Fig. 1        ein Beispiel für einen Rahmenaufbau eines Datensignals

Fig.2 a+b    ein blockdiagrammartiges Ausführungsbeispiel für einen Generator

Fig. 3        ein blockdiagrammartiges Ausführungsbeispiel für einen Dekoder und

Fig.4 a+b    ein Beispiel für ein Spursignal nach dem erfindungsgemäßen Verfahren und dem zugehörigen digitalen bitseriellen Datenstrom

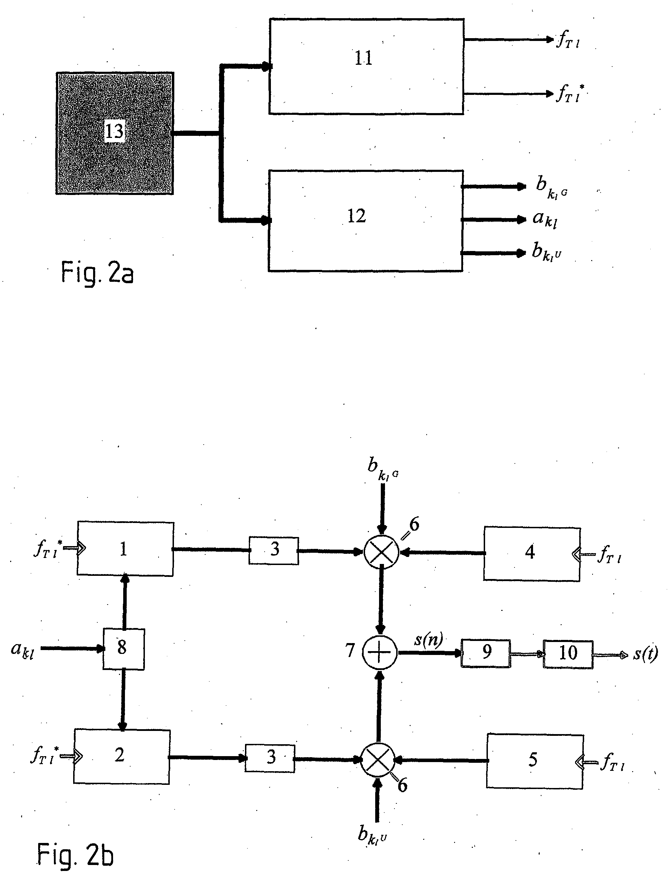

Die Schaltung des Generators ist in Figur 2 a, b abgebildet. Die Einheit 13 erzeugt das multiinformelle Signal, das aus unterschiedlichen unipolaren und bipolaren seriellen Datenströmen besteht. Im Frequenzgenerator 11 werden die verschiedenen Taktfrequenzen zur Taktung der Speichereinheiten 1, 2, 4 und 5 erzeugt. Die Schaltungseinheit 12 übernimmt die Datenrahmenbildung, bestimmt die redundanten Bits zur fehlersichernden Codierung und führt die Kanalcodierung der unipolaren und bipolaren seriellen Datenströme aus. Die Speichereinheit 1 enthält die Abtastwerte einer vollständigen harmonischen Schwingung der Frequenz $f_{d\,l}$. Die Speichereinheit 2 enthält dieselben Abtastwerte dieser harmonischen Schwingung der Frequenz $f_{dl}$, allerdings ist die Schwingung um eine Viertel Periode gegenüber Speicher 1 verschoben. Die Speichereinheiten 4 und 5 enthalten jeweils die Abtastwerte einer vollständigen harmonischen Schwingung der Frequenz $f_l$, wobei wiederum eine Verschiebung von einer Viertel Periode zwischen Speicher 4 und Speicher 3 besteht. In der arithmetischen Einheit 8 wird ein Offset errechnet, der kumulativ von allen zurückliegenden Logikwerten $a_{kl}$ des bipolaren Datenstromes abhängt. Dieser Offset setzt den Adresszeiger auf den zuerst auszulesenden Abtastwert der Speichereinheiten 1 und 2. Die Schaltungseinheiten 3 verursachen einen Vorzeichenwechsel der Ausgangswerte der Speicher 1 und 2 bei jedem Bittakt des bipolaren Datenstromes. Der obere Multiplizierer 6 errechnet das Ergebnis der Multiplikation aus dem vorzeichenrichtigen Ausgangswert des Speichers 1 mit dem Ausgangswert des Speichers 4 und dem Logikwert $b_{klG}$ des unipolaren Datenstromes. Der untere Multiplizierer 6 errechnet das Ergebnis der Multiplikation aus dem vorzeichenrichtigen Ausgangswert des Speichers 2 mit dem Ausgangswert des Speichers 5 und dem Logikwert $b_{klU}$ des unipolaren Datenstromes. Die beiden Ergebnisse der Multiplizierer 6 werden mittels Addierer 7 aufsummiert zum Teilsignal $s(n)$. Das Gesamtsignal $s(n)$ ergibt sich aus der Überlagerung aller Teilsignale der L unterschiedlichen bipolaren und unipolaren Datenströme. Die in der oberen Hälfte von Figur 2 dargestellte Schaltungsanordnung muss daher für die insgesamt L verschiedenen bipolaren und unipolaren Datenströme L mal ausgeführt werden. Der Analog-Digital-Umsetzer 9 wandelt die digitalen Abtastwerte des Gesamtsignals $s(n)$ in analoge Spannungswerte um, die periodisch mit der Frequenz wiederholte störende Frequenzanteile aufweisen. Zur Beseitigung dieser störenden Frequenzkomponente wird ein an die Taktfrequenz angepasstes Tiefpassfilter 10 nachgeschaltet. Das so gewonnene analoge Spursignal $s(t)$ wird auf den Ablenkspiegel des Masteraufzeichnungsgerätes geschaltet.

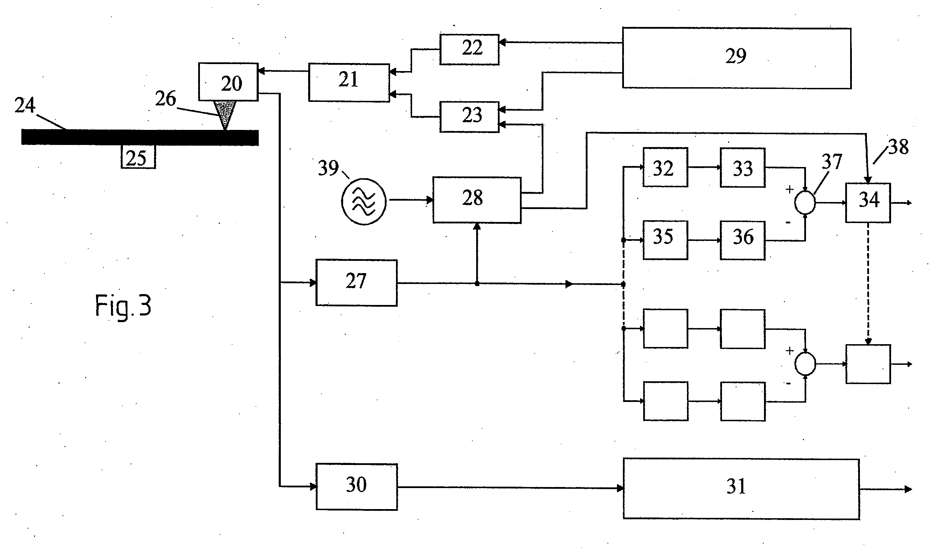

Figur 3 zeigt ein Beispiel für ein Aufzeichnungs- und -Wiedergabegerät für optische Datenträger. Die optische Disc 24 wird von der Motoreinheit 25 in der horizontalen Ebene um ihren Mittelpunkt gedreht, wobei die lineare Geschwindigkeit relativ zum optischen Abtaster 20 konstant gehalten wird. Der Laserstrahl 26 wird mittels des Aktuators 21auf die Datenebene des optischen Datenträgers 24 fokussiert und radial auf der Datenspur gehalten. Zur Kontrolle des Fokus und der radialen Nachführung dienen der Fokusregelkreis 22 und der radiale Regelkreis 23. Die Ablaufsteuerung der Regelkreise, d. h. das Öffnen und Schließen während der verschiedenen Betriebszustände des Aufzeichnungs- und - Wiedergabeprozesses wird vom Mikrorechner 29 vorgenommen. Die Diodensignale, die vom mehrfach geteilten optischen Detektor des optischen Abtasters 20 erzeugt werden, enthalten im Wiedergabefall die Information über den Fokusfehler, den radialen Fehler und das Datensignal der aufgezeichneten Information. Der Fokusfehler und der radiale Fehler werden als Regelgrößen für die entsprechenden Regelkreise herangezogen. Das optische Informationsdatensignal wird mittels der Signalformungseinheit 30 in ein digitales Signal umgewandelt und anschließend vom Datenprozessor 31 decodiert. Sind keine Informationsdaten auf dem optischen Datenträger aufgezeichnet, so enthalten die Diodensignale des optischen Abtasters 20 nur die Fehlersignale, wobei das radiale Fehlersignal zusätzlich die im Spursignal aufgezeichneten multiinformellen Daten enthält. Das Spursignal wird mittels der arithmetischen Einheit 27 gebildet und vom kohärenten Detektor 28 auf die Frequenz des Referenzoszillators 39 geregelt. Hierzu wird die Spannung des Motors 25 geeignet variiert. Aus der Frequenz des Referenzoszillators 39 werden durch entsprechende Frequenzteiler, die im Detektor 28 enthalten sind, die Bitsynchronisierungssignale 38 erzeugt, die die Bitrückgewinnungsschaltungen 34 steuern. Zur Dekodierung der im Spursignal enthaltenen multiinformellen Daten dienen die Schaltungskomponenten 32, 33, 34, 35, 36 und 37, die je nach Anzahl der parallelen Datenströme ein- oder mehrfach ausgeführt sein müssen. Dieses wird durch die wiederholt dargestellten leeren Blöcke in Figur 3 angedeutet. Die Schaltungen 32 und 35 sind Optimalfilter mit den Stoßantworten $h_{0I}(t) = A_I\, s_{0I}(t)\, \cos\,(2\,\pi\,(f_I - f_{Id}))$ und $h_{1I}(t) = A_{II}\, s_{1I}(t)\, \cos\,(2\,\pi\,(f_I + f_{Id}))$, wobei $s_{0I}(t)$ und $s_{1I}(t)$ an die Pulsform für die "0" - und "1"-Datenbits angepasst sind. Die Hüllkurvendetektoren 33 und 36 erzeugen die Einhüllende der Korrelation aus dem Ausgangssignal der arithmetischen Einheit 27 und der Stoßantworten der Optimalfilter 33 und 36. Der Subtrahierer 37 liefert je nach Bitwert ein positives oder negatives Signal, dessen Maximum am Ende der Bitperiode auftritt. Die mit Hilfe des Signals 38 synchronisierte Bitrückgewinnungsschaltung 34 ordnet dem positiven Maximum ein "1 "-Bit und dem negativen Maximum ein "0"-Bit am Ausgang zu.

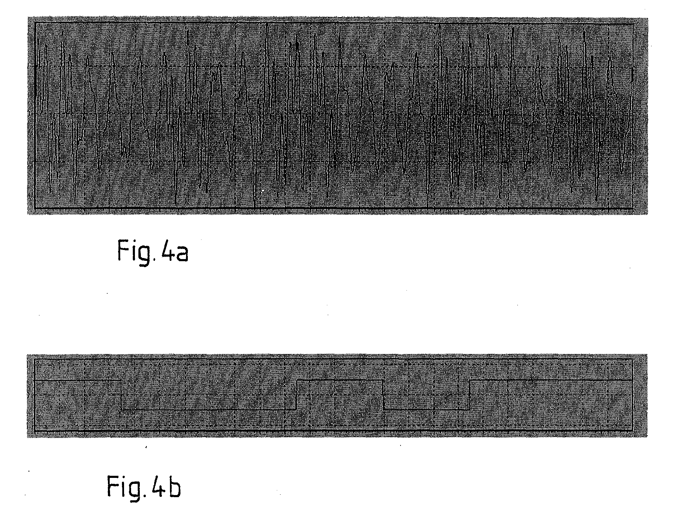

Figur 4 a, b zeigt beispielhaft ein Spursignal (Fig. 4a), das nach dem erfindungsgemäßen Verfahren ausgeführt ist, und das zugehörige Informationsmuster (Fig. 4b), das nur aus einem digitalen bitseriellen Datenstrom besteht.

**Bezugszeichenliste**

1    Speicher

2    Speicher

3    Schaltungseinheit zur Vorzeichenumkehr

4    Speicher

5    Speicher

6    Multiplizierer

7    Addierer

8    arithmetische Einheit

9    Analog-Digital-Wandier

10   Tiefpassfilter

11   Frequenzgenerator

12   Schaltungseinheit zur Datenrahmenbildung

13   Einheit zur Erzeugung digitaler Datenströme

20   Optische Abtaster

21    Akutator

22    Fokusregelkreis

23    Radialregelkreis

24    Disc

25    Motoreinheit

26    Lasereinheit

27    Arithmetische Einheit

28    Detektor

29    Mikrorechner

30    Signalformungseinheit

31    Datenprozessor

32    Optimalfilter

33    Hüllkurvendetektoren

34    Bitrückgewinnungsschaltung

35    Optimalfilter

36    Hüllkurvendetektoren

37    Subtrahierer

38    Bitsynchronisationssignal

39    Referenzozillator

**Patentansprüche**

1. Verfahren zur Erzeugung einer Signalwelle zur Herstellung einer Servospur auf einem Datenträger des beschreibbaren, optisch auslesbaren Typs, wobei in der Signalwelle ein abtrennbares digitales Informationsmuster enthalten ist, **dadurch gekennzeichnet,**
**dass** das digitale Informationsmuster durch Amplituden- und/oder Phasen-Manipulation von überlagerten Teilschwingungspaaren in diese eingebracht wird, wobei jedes dieser Teilschwingungspaare aus der Multiplikation einer ersten und einer zweiten harmonischen Schwingungskomponente mit unterschiedlichen Frequenzen besteht.

2. Verfahren nach Anspruch 1 **dadurch gekennzeichnet, dass** die Teilschwingungspaare die Eigenschaft aufweisen, dass die ersten Schwingungskomponenten und die zweiten Schwingungskomponenten einer Teilschwingung zueinander orthogonal sind.

3. Verfahren nach einem der vorgehenden Ansprüche **dadurch gekennzeichnet, dass** die Teilschwingungspaare die Eigenschaft aufweisen, dass die Frequenzen der zweiten Schwingungskomponenten wesentlich größer sind als die Frequenzen der ersten Schwingungskomponenten der Teilschwingungspaare.

4. Verfahren nach einem der vorhergehenden Ansprüche, **dadurch gekennzeichnet, dass** eine Vielzahl von Teilschwingungspaaren erzeugt und zur Bildung eines Gesamtsignals überlagert werden.

5. Verfahren nach einem der vorhergehenden Ansprüche, **dadurch gekennzeichnet, dass** bei dem Einbringen eines digitalen Informationsmusters in eine Signalwelle unterschiedliche Modulationsarten miteinander kombiniert werden.

6. Verfahren nach einem der vorhergehenden Ansprüche, **dadurch gekennzeichnet, dass** ein digitales Informationsmuster als unipolarer Datenstrom den Amplituden einer Teilschwingung und als bipolarer Datenstrom als Phasenwinkel der Teilschwingung aufmanipuliert und die Teilschwingungen paarweise überlagert werden.

7. Verfahren nach einem der vorhergehenden Ansprüche, **dadurch gekennzeichnet, dass** ein digitales Informationsmuster aus nur einem einzigen bitseriellen Datenstrom besteht und dieser Datenstrom in mindestens zwei komplementäre Signale aufgespalten wird, die unterschiedlichen Kanalcodierungsvorschriften, Modulationsarten oder Spektralbereichen unterzogen werden.

8. Verfahren nach einem der vorhergehenden Ansprüche, **dadurch gekennzeichnet, dass** das digitale Informationsmuster Positionsinformationsdaten und / oder Aufzeichnungssteuerungsdaten und /oder und sicherheitsrelevante Daten enthält.

9. Datenträger vom beschreibbaren, optisch auslesbaren Typ mit einer Servospur in Form einer spiralförmig auf dem Datenträger abgelegten Signalwelle, aus welcher wenigstens ein Informationsmuster mit einem digitalen Datenstrom abtrennbar ist, **dadurch gekennzeichnet, dass** die Signalwelle einer nach dem Verfahren nach einem der Ansprüche 1 bis 8 gebildeten Signalwelle entspricht.

10. Datenträger nach Anspruch 9, **dadurch gekennzeichnet, dass** in der die Servospur bildenden Signalwelle ein Informationsmuster mit mehreren parallel verlaufenden Datenströmen enthalten sind.

11. Datenträger nach einem der Ansprüche 9 oder 10, **dadurch gekennzeichnet, dass** dieser durch die Abformung aus einer Form gebildet ist, die ihrerseits durch Abformung einer Grundform entstanden ist, auf welcher Grundform durch Belichtung und Bestrahlung eine nach dem Verfahren der Ansprüche 1 bis 8 gebildete Signalwelle aufgezeichnet ist.

12. Generator zur Erzeugung einer Signalwelle nach dem Verfahren nach einem der Ansprüche 1 bis 8, **dadurch gekennzeichnet, dass** dieser eine Funktionsgruppe umfasst, welche

- Speichereinheiten für die Abtastwerte von Schwingungen unterschiedlicher Frequenzen,

- Einheiten zur Erzeugung von Teilsignalen durch die Einbringung eines digitalen Datenstroms in die Tellschwingungen und

- Einheiten zur Überlagerung der Teilschwingungen zu einem Gesamtsignal aufweist.

13. Generator nach Anspruch 12, **dadurch gekennzeichnet, dass** dieser mehrere Funktionsgruppen aufweist, deren Gesamtsignale zur Bildung eines Endsignals überlagert werden.

14. Decoder zur Bildung eines digitalen Informationsmusters aus einer nach dem Verfahren nach einem der Ansprüche 1 bis 8 gebildeten Signalwelle, **dadurch gekennzeichnet, dass** dieser eine Funktionsgruppe umfasst, welche

- Optimalfilter zur Erzeugung von an die Pulsformen einer digitalen Datenstruktur angepassten Stoßantworten,

- Hüllkurvendetektoren,

- Subtrahierer eines auf ein Maximum anwachsenden positiven bzw. negativen Signals und

- Einheiten zur Zuordnung eines "1"-Bits bzw. "0"-Bits zu dem aus dem Subtrahierer stammenden positiven bzw. negativen Signal aufweist.

15. Decoder nach Anspruch 14, **dadurch gekennzeichnet, dass** dieser in Abhängigkeit der in der Servospur parallel eingebrachten Datenströme mehrere Funktionsgruppen aufweist.

# Fig. 1

| 8 Bit | 8 Bit | 8 Bit | | 8 Bit |
|---|---|---|---|---|
| Wort 1 | Wort 2 | Wort 3 | ▯▯▯▯▯▯▯▯▯▯▯▯ | Wort M |

| N Bit | N Bit | N Bit | | N Bit |
|---|---|---|---|---|
| Wort 1 | Wort 2 | Wort 3 | ▯▯▯▯▯▯▯▯▯▯▯▯ | Wort M |

| S Bit | N Bit | N Bit | N Bit | | N Bit | F Bit |
|---|---|---|---|---|---|---|
| Sync-Wort | Wort 1 | Wort 2 | Wort 3 | ▯▯▯▯▯▯▯▯▯▯▯▯ | Wort M | Fehlerwort |

Fig. 2a

$$f_{T\,l}$$

$$f_{T\,l}^{*}$$

$$b_{k_l{}^G}$$

$$a_{k_l}$$

$$b_{k_l{}^U}$$

Fig. 2b

$$f_{T\,l}^{*}$$

$$a_{kl}$$

$$f_{T\,l}^{*}$$

$$b_{k_l{}^G}$$

$$f_{T\,l}$$

$$s(n)$$

$$s(t)$$

$$f_{T\,l}$$

$$b_{k_l{}^U}$$

Fig.3

Fig. 4a

Fig. 4b

| Europäisches Patentamt | EUROPÄISCHER RECHERCHENBERICHT | Nummer der Anmeldung |
|---|---|---|
| | | EP 03 01 3187 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 03 034414 A (ISHIBASHI HIROMICHI ;OGAWA HIROSHI (JP); SONY CORP (JP); KOBAYASHI) 24. April 2003 (2003-04-24) * Zusammenfassung * * Seite 34, Absatz 2.4 - Seite 35 * * Abbildung 3 * --- | 1-15 | G11B7/007 G11B27/24 G11B7/09 G11B19/28 |
| X | WO 03 034415 A (ISHIBASHI HIROMICHI ;MASUHARA SHIN (JP); OGAWA HIROSHI (JP); SANO) 24. April 2003 (2003-04-24) * Zusammenfassung * * Abbildung 3A * * Abbildung 3B * --- | 1-15 | |
| A | PROAKIS J G: "Digital Communications" DIGITAL COMMUNICATIONS, NEW YORK, MCGRAW HILL, US, 1989, Seiten 233-238, XP002193198 * Abbildung 5.1.3 * --- | 14,15 | |
| D,A | EP 0 299 573 A (PHILIPS NV) 18. Januar 1989 (1989-01-18) * das ganze Dokument * --- | 1-15 | RECHERCHIERTE SACHGEBIETE (Int.Cl.7) G11B |
| D,A | EP 0 265 984 A (PHILIPS NV) 4. Mai 1988 (1988-05-04) * das ganze Dokument * --- | 1-15 | |
| D,A | EP 0 265 695 A (SONY CORP) 4. Mai 1988 (1988-05-04) * das ganze Dokument * --- | 1-15 | |
| D,A | PATENT ABSTRACTS OF JAPAN vol. 011, no. 093 (P-559), 24. März 1987 (1987-03-24) & JP 61 243974 A (SANYO ELECTRIC CO LTD), 30. Oktober 1986 (1986-10-30) * Zusammenfassung * --- | 1-15 | |

-/--

Der vorliegende Recherchenbericht wurde für alle Patentansprüche erstellt

| Recherchenort | Abschlußdatum der Recherche | Prüfer |
|---|---|---|
| DEN HAAG | 6. November 2003 | Valencia, E |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes Dokument

# EP 1 486 957 A1

**Europäisches Patentamt**

## EUROPÄISCHER RECHERCHENBERICHT

Nummer der Anmeldung

EP 03 01 3187

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | EP 0 325 330 A (PHILIPS NV) 26. Juli 1989 (1989-07-26) * das ganze Dokument * --- | 1-15 | |
| D,A | DE 31 00 421 A (PHILIPS NV) 21. Januar 1982 (1982-01-21) * das ganze Dokument * ----- | 1-15 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| DEN HAAG | 6. November 2003 | Valencia, E |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
..................................................................
& : Mitglied der gleichen Patentfamilie, übereinstimmendes
  Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 03 01 3187

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-11-2003

| Im Recherchenbericht angeführtes Patentdokument | | Datum der Veröffentlichung | Mitglied(er) der Patentfamilie | | Datum der Veröffentlichung |
|---|---|---|---|---|---|
| WO 03034414 | A | 24-04-2003 | JP | 2003123267 A | 25-04-2003 |
| | | | CA | 2430904 A1 | 24-04-2003 |
| | | | WO | 03034414 A1 | 24-04-2003 |
| WO 03034415 | A | 24-04-2003 | JP | 2003123320 A | 25-04-2003 |
| | | | WO | 03034415 A1 | 24-04-2003 |
| EP 0299573 | A | 18-01-1989 | NL | 8701632 A | 01-02-1989 |
| | | | DE | 3885169 D1 | 02-12-1993 |
| | | | DE | 3885169 T2 | 05-05-1994 |
| | | | EP | 0299573 A1 | 18-01-1989 |
| | | | JP | 1039632 A | 09-02-1989 |
| | | | US | 4907216 A | 06-03-1990 |
| EP 0265984 | A | 04-05-1988 | NL | 8602504 A | 02-05-1988 |
| | | | NL | 8700655 A | 02-05-1988 |
| | | | AU | 599425 B2 | 19-07-1990 |
| | | | AU | 7926087 A | 14-04-1988 |
| | | | BR | 8705271 A | 24-05-1988 |
| | | | CA | 1322052 C | 07-09-1993 |
| | | | CZ | 9002042 A3 | 12-04-1995 |
| | | | CZ | 8707155 A3 | 18-01-1995 |
| | | | DE | 3778292 D1 | 21-05-1992 |
| | | | EP | 0265984 A1 | 04-05-1988 |
| | | | ES | 2031878 T3 | 01-01-1993 |
| | | | JP | 2697829 B2 | 14-01-1998 |
| | | | JP | 63103454 A | 09-05-1988 |
| | | | JP | 2783514 B2 | 06-08-1998 |
| | | | JP | 7169052 A | 04-07-1995 |
| | | | KR | 9600272 B1 | 04-01-1996 |
| | | | SK | 204290 A3 | 04-06-1997 |
| | | | SK | 715587 A3 | 11-02-1999 |
| | | | RU | 2017235 C1 | 30-07-1994 |
| | | | US | 5339301 A | 16-08-1994 |
| | | | US | 5023856 A | 11-06-1991 |
| EP 0265695 | A | 04-05-1988 | JP | 2565196 B2 | 18-12-1996 |
| | | | JP | 63087682 A | 18-04-1988 |
| | | | JP | 2590835 B2 | 12-03-1997 |
| | | | JP | 63087655 A | 18-04-1988 |
| | | | DE | 3779862 D1 | 23-07-1992 |
| | | | DE | 3779862 T2 | 21-01-1993 |
| | | | EP | 0265695 A2 | 04-05-1988 |
| | | | HK | 80995 A | 01-06-1995 |
| | | | KR | 9506412 B1 | 15-06-1995 |
| | | | SG | 9590662 A2 | 01-09-1995 |

Für nähere Einzelheiten zu diesem Anhang : siehe Amtsblatt des Europäischen Patentamts, Nr.12/82

# EP 1 486 957 A1

**ANHANG ZUM EUROPÄISCHEN RECHERCHENBERICHT**
**ÜBER DIE EUROPÄISCHE PATENTANMELDUNG NR.**

EP 03 01 3187

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-11-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 0265695 | A | | US | 4942565 A | 17-07-1990 |
| JP 61243974 | A | 30-10-1986 | JP | 7056708 B | 14-06-1995 |
| EP 0325330 | A | 26-07-1989 | NL | 8800152 A | 16-08-1989 |
| | | | AT | 96935 T | 15-11-1993 |
| | | | BR | 8900231 A | 12-09-1989 |
| | | | CA | 1319984 C | 06-07-1993 |
| | | | CN | 1035576 A ,B | 13-09-1989 |
| | | | DD | 278668 A5 | 09-05-1990 |
| | | | DD | 284990 A5 | 28-11-1990 |
| | | | DD | 285657 A5 | 19-12-1990 |
| | | | DE | 68910333 D1 | 09-12-1993 |
| | | | DE | 68910333 T2 | 05-05-1994 |
| | | | EP | 0325330 A1 | 26-07-1989 |
| | | | ES | 2046441 T3 | 01-02-1994 |
| | | | JP | 1224929 A | 07-09-1989 |
| | | | JP | 3029201 B2 | 04-04-2000 |
| | | | KR | 132674 B1 | 18-04-1998 |
| | | | MX | 174422 B | 16-05-1994 |
| | | | SI | 8910138 A ,B | 30-04-1996 |
| | | | RU | 2092910 C1 | 10-10-1997 |
| | | | US | 4999825 A | 12-03-1991 |
| DE 3100421 | A | 21-01-1982 | NL | 8000121 A | 03-08-1981 |
| | | | AR | 232053 A1 | 30-04-1985 |
| | | | AT | 369916 B | 10-02-1983 |
| | | | AT | 5881 A | 15-06-1982 |
| | | | AU | 542656 B2 | 28-02-1985 |
| | | | AU | 6599381 A | 16-07-1981 |
| | | | BE | 886992 A1 | 07-07-1981 |
| | | | BR | 8100042 A | 21-07-1981 |
| | | | CA | 1157945 A1 | 29-11-1983 |
| | | | CH | 675499 A5 | 28-09-1990 |
| | | | DD | 160624 A5 | 23-11-1983 |
| | | | DD | 203789 A5 | 02-11-1983 |
| | | | DE | 3100421 A1 | 21-01-1982 |
| | | | DE | 3153674 C2 | 15-11-1990 |
| | | | DK | 3481 A ,B, | 10-07-1981 |
| | | | ES | 8201756 A1 | 16-03-1982 |
| | | | FR | 2473769 A1 | 17-07-1981 |
| | | | GB | 2069219 A ,B | 19-08-1981 |
| | | | HK | 47984 A | 15-06-1984 |
| | | | IT | 1210972 B | 29-09-1989 |
| | | | JP | 1023859 B | 09-05-1989 |
| | | | JP | 1541114 C | 31-01-1990 |

EPO FORM P0461

Für nähere Einzelheiten zu diesem Anhang : siehe Amtsblatt des Europäischen Patentamts, Nr.12/82

20

## ANHANG ZUM EUROPÄISCHEN RECHERCHENBERICHT
### ÜBER DIE EUROPÄISCHE PATENTANMELDUNG NR.

EP 03 01 3187

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-11-2003

| Im Recherchenbericht angeführtes Patentdokument | Datum der Veröffentlichung | Mitglied(er) der Patentfamilie | Datum der Veröffentlichung |
|---|---|---|---|
| DE 3100421 A | | JP 56105343 A | 21-08-1981 |
| | | MX 150987 A | 04-09-1984 |
| | | NZ 195974 A | 28-09-1984 |
| | | SE 447768 B | 08-12-1986 |
| | | SE 8100021 A | 10-07-1981 |
| | | SG 10684 G | 04-01-1985 |
| | | US 4972401 A | 20-11-1990 |
| | | US 5682365 A | 28-10-1997 |
| | | ZA 8007999 A | 28-07-1982 |

EPO FORM P0461

Für nähere Einzelheiten zu diesem Anhang : siehe Amtsblatt des Europäischen Patentamts, Nr.12/82